# EUROPEAN PATENT APPLICATION

(11) **EP 2 629 513 A1**
(43) Date of publication of application: **21.08.2013**
(21) Application number: 12305161.7
(22) Date of filing: 14.02.2012
(51) Int. Cl.: H04N 7/14

(54) **Method and arrangement for generating a composed threaded video**

(71) Applicant: Alcatel Lucent, 75007 Paris (FR)
(72) Inventor: Van Raemdonck, Wolfgang, 2140 Antwerp (BE); Verde, Orlando Jesus, 2018 Antwerp (BE); Tytgat, Donny, 9000 Gent (BE); Aerts, Maarten, 9120 Beveren-Waas (BE)
(74) Representative: ALU Antw Patent Attorneys

(57) **Abstract**

A method for generating a composed threaded video from respective video fragments with associated metadata posted by respective users to a video composing server arrangement, comprises the steps of
- generating a new thread or updating an existing thread of an existing composed threaded video based on analysis of said associated metadata,
- creating a new composed threaded video based on said respective video fragments or updating said existing composed threaded video by adding or inserting said respective video fragments from said respective users taking into account said updated existing thread.

## Description

The present invention relates to a method for automatically generating composed threaded videos.

Video communication sessions such as video conferences nowadays require participants to be available at the same time. This is in contrast to other communication channels such as email or Internet forums, wherein e.g. responses to questions can be posted in an asynchronous way, eliminating the need for people being simultaneously engaged in the communication session

In general such discussion boards are text based and people are adding replies to other people's input. The Internet forum itself builds the textual hierarchy of the whole discussion, which hierarchy is generally denoted a thread. To follow a discussion a participant has to read the whole thread.

It is an object of embodiments of the present invention to present an automated video editing method and system, allowing users to easily post an additional video stream as a reply to and within any part of an existing video, for thereby enabling the automated generation of a composed threaded video.

This object is achieved by the method for generating a composed threaded video from respective video fragments with associated metadata posted by respective users to a video composing server arrangement, said method comprising the steps of
- generating a new thread or updating an existing thread of an existing composed threaded video based on analysis of said associated metadata,
- creating a new composed threaded video based on said respective video fragments or updating said existing composed threaded video by adding or inserting said respective video fragments from said respective users taking into account said updated existing thread.

In this way an automated video editing method is provided.

In an embodiment the updating of said composed threaded video comprises:
- analyzing the updated thread for identifying the location of the indicated respective video fragments posted by the respective users and for deriving mixing instructions
- fetching and decoding said indicated respective video fragments into a set of frames of pixel data
- concatenating respective sets of frames into an updated order for generating an updated composed video stream, based on said mixing instructions,
- encoding said updated composed video stream for provision to a video storage.

In another embodiment the method further comprises a step of post processing the updated composed video stream.

The present invention relates as well to embodiments of a video composing server for realizing the aforementioned method.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 shows a high level overview of an embodiment of the method and client-server arrangement,
Fig. 2 shows a more detailed embodiment indicating different steps,
Figs 3a-c show an example of the generation of a composed video, in function of time,
Fig. 4 shows a flowchart of an embodiment of the method, and
Fig. 5 shows a detailed embodiment of the virtual director module of Fig. 1.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

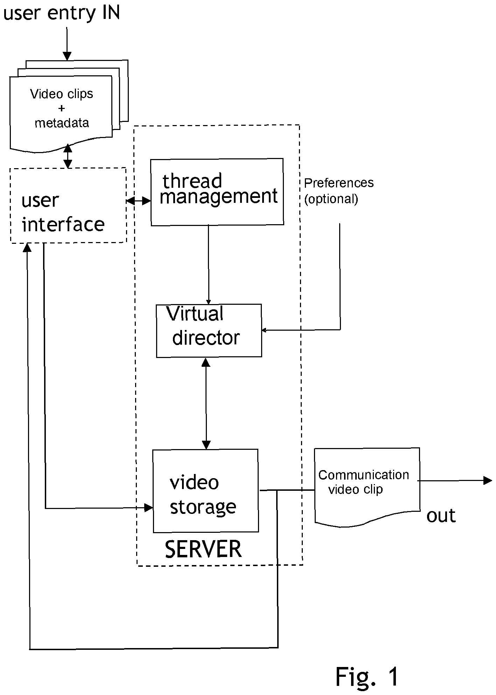

A general principle is illustrated in figure 1. User entry data such as video fragments, denoted video clips, are provided, together with metadata indicative of a threaded video to be joined or to be started, where to join or to insert, etc.. This will be explained more into detail in a further paragraph. These video clips are the communication fragments that are submitted by different participants of a video communication session. These participants can thus participate whenever they want, so do not need to be simultaneously available. User data may also contain data other than video such as e.g. still images, pictures, text, power point presentations etc. These are provided by a user via a user interface of a video composing service, implemented on a single or distributed server arrangement, denoted "SERVER" on Fig. 1. The user interface may be realized by e.g. a web application accessible from an end user's device such as a computer or mobile phone or tablet or the like. The user interface will thus be adapted to communicate with the server arrangement. The server arrangement may host server application software and is generally adapted to implement or provide three main functions, depicted in Fig. 1 by 3 different modules: a video storage function, a thread management function and a composing function. The latter composing function is performed by the "virtual director" shown on Fig. 1 which is adapted to generate and update a composed video based on the collection of video clips provided by the different users, taking the thread information as updated by the thread management module into account. The composed video will thus be updated, upon receiving a new input video with associated metadata from the users. The associated metadata are used to update the communication/thread hierarchies themselves, and can be gathered using multiple methods, which are further discussed in the embodiments. The virtual director uses all this information, together with optional preferences regarding what to show and/or how to do so, and creates a composed video clip which conveys the full communication session. The composed video will also be stored in the video storage module, such that users can have access to the composed threaded video as available at any point in time.

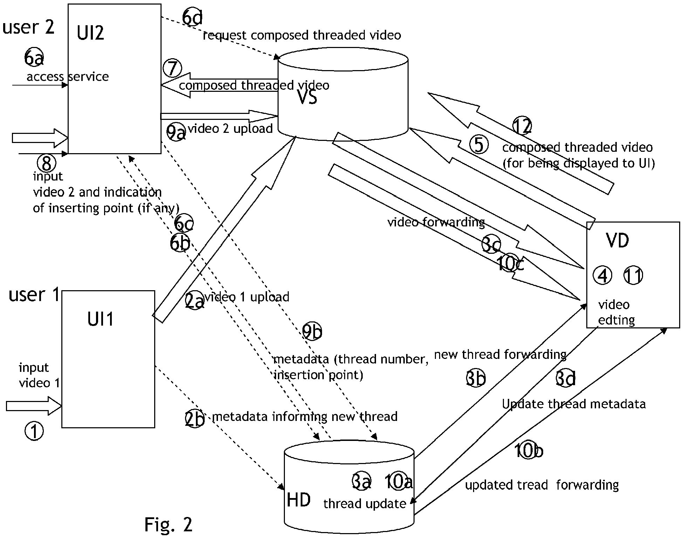

In an embodiment, depicted in Fig. 2, a server arrangement comprises a video hosting server VS for hosting the different video fragments or clips as posted by the different users. The server arrangement comprises as well a virtual director VD for generating successive versions or updates of a composed video per thread, and a hierarchy server HD for managing the threads and hierarchies. While these are depicted in Fig. 2 as consisting of different entities, the video hosting server, virtual director and hierarchy server may equally be realized by means of one single device or software program, or any combination of hardware and software, with the functions being combined or separated over 1,2 or 3 different modules, implemented on one or several servers or computers.

A user client, e.g. a web interface, will serve as an interface to the user and the server arrangement. In the embodiment of Fig. 2 two users are depicted, each with two different user clients U11 and U12.

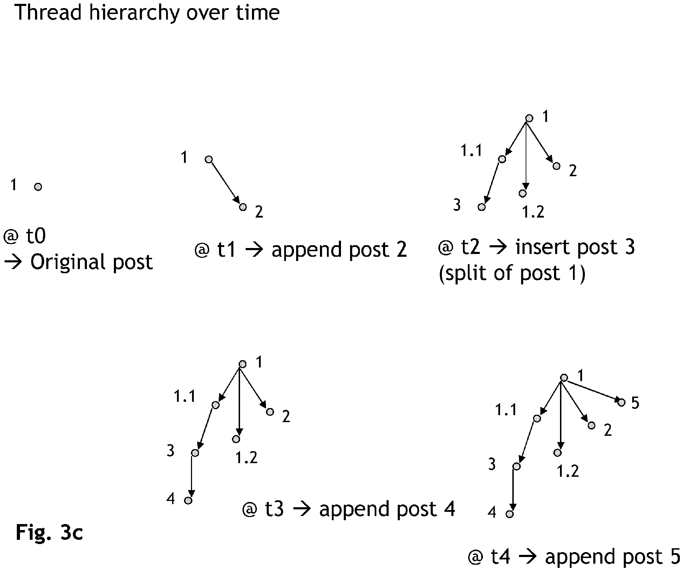

When user 1 starts a new thread, in step 1, he/she inputs a video fragment via the user interface client, denoted U11, to the video storage or video hosting service, denoted VS. This upload is denoted as step 2a. In parallel, in step 2b, the User client is adapted to generate metadata, in this case indicating that a new tread is started by a particular user. This metadata may comprise the name of the user, duration of the video, identification of the video, or optionally the topic of the new thread. In another embodiment the metadata for the first video fragment of a new thread may just contain an indication that a new thread is to be started, and HD will then itself assign metadata it can extract from the clip, such as the duration of the video, or the topic. In the first embodiment, depicted in Fig. 2, the metadata indicating that a new thread is launched together with further potential information is forwarded to the hierarchy database HD in step 2b. Upon receipt thereof, the hierarchy server HD analyses the metadata and, based on the analysis, will in this case effectively generate a new thread in step 3a, at this point in time comprising a hierarchy with one single entry. A thread can be represented as a tree structure, as shown in fig. 3c as will be further explained with reference to this figure. In step 3b, this new thread is forwarded to the virtual director VD, which, upon analysis of this information will fetch the video 1 from the video server, in step 3c.The virtual director VD will then generate in step 4 the first version of this referenced composed threaded video, for provision back to the video server VS in step 5. The URL to the composted video on the VS is returned to the HD in step 3d, so the HD always contains a reference to the most up-to-date composed video. In an embodiment this URL is returned to the web interface when a user browses through the available threads.

The same user, or another user, as is the case as shown in Fig. 2, can then indicate in step 6a to his user interface U12 that he/she wants to watch one of these composed videos, and this request is forwarded in step 6b to the HD. This module then returns in step 6c the information with the url of the available videos. This url then points to the video storage device, upon which step the user can select one and provide this information step 6d, and watch this composed video once in step 7. This user can further decide to post a video reply to this particular selected composed video. This reply may be a video such as a holiday movie, which was stored on the user's computer or on a memory device or on a memory device coupled to the user client enabling hardware. Alternatively this video may still need to be recorded, e.g. as a video showing user 2 to utter some verbal and physical comments to video 1. In this case user2 records in step 8 his video reply, denoted video 2, and uploads this video 2 in step 9a to the video server, via the user interface U12. In step 8, during the provision of the video to the user interface U12, the user2 also indicates, either by stopping the composed video at a certain frame by e.g. clicking on an insert button/window or giving a voice command indication, that the user is going to start speaking in front of his camera, and at which position in the composed video his/her own video 2 has to be inserted. If user 2 does not indicate this position in the video stream, he/she can select an entry in the thread hierarchy, visualized on the web U1, by clicking an entry. This indicates that the video to upload is seen by the user as a reply on the selected entry. In case of no input from the user it may be implicitly assumed that video 2 is to be placed after video 1, or in general after the composed video so far, in chronological order. The recorded or pre-stored video2 is provided to the video storage VS server via the user interface U12 in step 9a. In parallel the time position information of video 2 with respect to its position within video1 is also provided as metadata to the hierarchy server HD in step 9b. This metadata will also include the identification of the previously assigned identification thread of the composed threaded video, the user2 identification, an identification of video2, etc. This metadata will be used in HD to update the selected thread under consideration, in step 10a, which information is further provided to the virtual director VD in step 10b. Upon receipt of this, the virtual director fetches the posted and stored video 2 from the video server VS in step 10c, as well as the latest version of the composed video for this thread, and starts generating an update of the composed video for this particular thread, taking into account all thread information. This takes place in step 11. The updated composed threaded video is provided again to the video server in step 12.

The virtual director VD is thus adapted to generate a smooth and sound new video clip based on the latest version of the composed video and the newly added video fragment, in general being the last added video fragment. The discussion hierarchy, represented by the updated thread information, is used to position the different fragments on a timeline. The virtual director is optionally also taking care about visual and style aspects, like appropriate color correction for the different fragments and transitions. The new composed threaded video clip can be watched again and a new question/reply etc can be posted to the discussion and the process starts all over again.

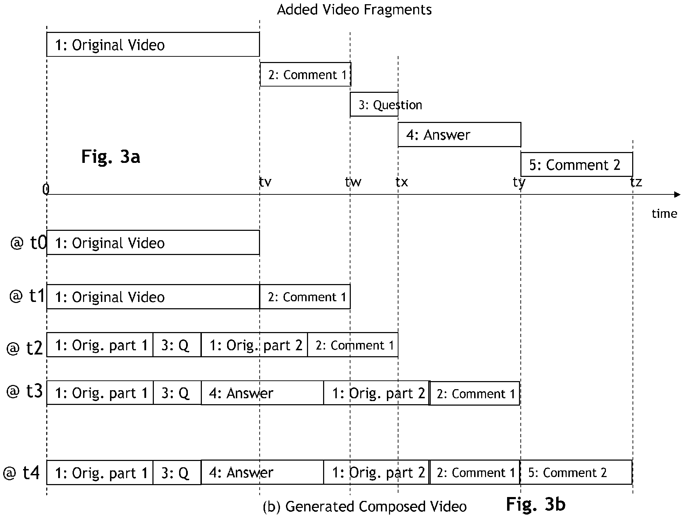

Figures 3a-c show in more detail an example view of the generation of a video clip based on different fragments and of the sequential update of the discussion hierarchy. Fig. 3a shows the different fragments that have been posted over time. An axis denoting the time is placed underneath these video fragments. Remark that this is a fictitious time, used for representing the length of the composed video on a virtual time scale. The real time lapsed between the generation of the first video and the finishing of the total composed video comprising the 5 video fragments posted by the 5 different users of this example, may take much longer, as will become clear from the explanation below.

This internal composition time starts running from 0 for each new composed video, thus for a new identified thread. The first video fragment, generated by user 1 and denoted "1: original video" has a duration of time tv. The notation "@t0" thereby indicates the available individual video fragments at internal processing time t0. Is is also to be remarked that the composition processing time is considered negligible on the timescale of the asynchronous inserts by different users. Access to the HD database has to be secured so no users can update the same thread at the same time.

At time t0 the original video is thus available at the storage sever, and can thus be watched by another user 2. This second user can however just watch this video a few hours later, in the real time. Upon having watched the video, this user 2 may want to post a comment, having a time duration being denoted by tw-tv on the internal time axis of Fig. 3a. User 2 may also indicate that this comment, denoted "2:comment 1 " has to be placed at the end of the composed video so far, so following the "1:original video" .The user will then forward this comment to the video storage server, and will in parallel provide the information where to place this comment, to the hierarchy server. The virtual director will then add this video fragment "2: comment 1 " after the original video. Again the time for the generation and the composition and the exchange of data between all servers and client is considered negligible. The internal video composing time axis at time tw will then indicate that at this internal time the generated composed video will comprise the original video followed by comment 1 posted by user 2, as can be observed from Fig. 3b. Fig3.c shows the evolution of the discussion hierarchy: at time t0 there was only one original post by user 1, depicted by the single node annotated "1". At internal composition time @t1, there is an additional branch from node 1 to a second node 2.

The thus composed video will then again be made available to the video server for users. At a later time, which may again be hours later, a third user will watch the composed video, and wants to ask a question. The video with this question, having a duration tx-tw is posted, by this user 3, which question refers to the first part of the original entry. In order to refer to this sub fragment, the user client will then enable user 3 to have this video fragment, denoted "3:question" placed within the original video fragment, exactly at the place where this user wants to have his/her question inserted. To this purpose the original fragment entry is split in two parts, denoted 1.1 and 1.2, and the virtual director will be such as to insert the video fragment with this question between both parts. This means that, at internal video composition time @t2, the composed video will look as represented on Fig. 3b: a first part of original video, followed by the question of user 3, followed by the second part of original video, followed by comment of user 2.

In order to indicate this split in the hierarchy, as shown in Fig. 3c, two more branches are added from node 1, being 1.1 and 1.2. The addition of the question from user 3 at time t3 to part 1.1 is again depicted by inserting a new node 3 at branch 1.1.

At a later stage, a user 4 might want to add an answer to the question of user 3. This answer will have a duration of ty-tx, and needs to be inserted after the question of user 3. This user 4 will then again indicate this via his user client, and the associated thread update will look like what is depicted in fig. 3c, lower left figure, indicating that the entry of user 3 is followed by an entry of user 4. The virtual director will ascertain that the answer posted by user 4 will follow the question of user 3, such that the total composed video at internal time t3 will look as depicted in Fig. 3b. Whenever a fifth user 5 will watch that video, this user might want to post a comment with a duration tz-ty just at the end. The hierarchy will be updated via another branch from 1 to 5.

The final hierarchy at this moment, as depicted by the lower right hierarchy tree of Fig. 3c thus indicates that a first video fragment, with index1, is split into a first sub-fragment, denoted 1.1, being followed by fragment 3, which itself is followed by fragment 4. Then the second sub-fragment, denoted 1.2 , of fragment 1 will follow, followed by fragment 2 and 5.

It is to be remarked that the virtual director, besides possibly splitting the fragments into the correct parts, and assembling the different parts and fragments into their correct order, as provided by the hierarchy information, will also do the automated video editing/coding. By comparing fig3b and fig3c @t4, it is made clear that the virtual director is concatenating the clips (e.g. 3) and sub-clips (e.g. 1.1 and 1.2) according to a depth-first traversal of the thread hierarchy. The video editing module of the virtual director works in the raw video/image domain. This eases the random access to the individual frames and allows embedding non-video data. This requires the clips on the video server to be decoded first before further processing. Also the stream will be encoded again after the completion of the montage. This coded stream is stored on the video server, ready for consumption by later users.

It is to be remarked that, besides video information, users may also submit non-video data such as still images, presentations, documents, etc., which also need to be integrated into one composed video conversation. This may involve additional decoding of these data into the raw video/image format.

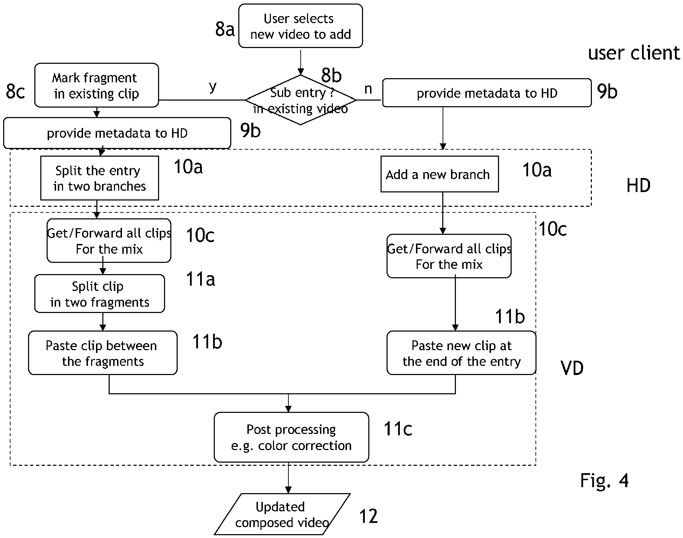

Fig. 4 illustrates some further detailed implementation of the different steps performed by the different modules. Reference numbers of the steps are similar as these of Fig. 2. Thus when a user might want to add a new video in step 8 of Fig. 2, this step is now further split into several sub-steps depending on whether it concerns a video clip to be inserted somewhere within the existing composed video, or whether it concerns a clip which needs to be appended at the end of the existing composed video. Checking whether one of these conditions applies is performed in step 8b, and, in case the new fragment needs to be inserted within an earlier provided fragment, this specific fragment and the insertion point have to be indicated in step 8c, and associated metadata related to this indication need to be provided to the hierarchy server in step 9b. Alternatively, when it concerns an addition by appending, relevant metadata for indicating this need as well be provided, in a similar step 9b. The hierarchy server then has to update the hierarchy. In the latter case a new leaf is to be added, and in the previous case where the new video fragment is to be inserted within an existing fragment, this relevant entry is to be split into two leafs.

This information is then forwarded to the virtual director in step 10b (not shown on fig. 4), which module is, upon receipt of this updated thread information, is adapted to get all relevant video fragments from the video server VS, and to either split the indicated clip into two separate fragments and to insert the new one in between these fragments, or either just appends the new video clip at the end of the composed video so for. Optionally some post processing can take place, upon which step the new updated composed video is provided to the video server in step 1 2.

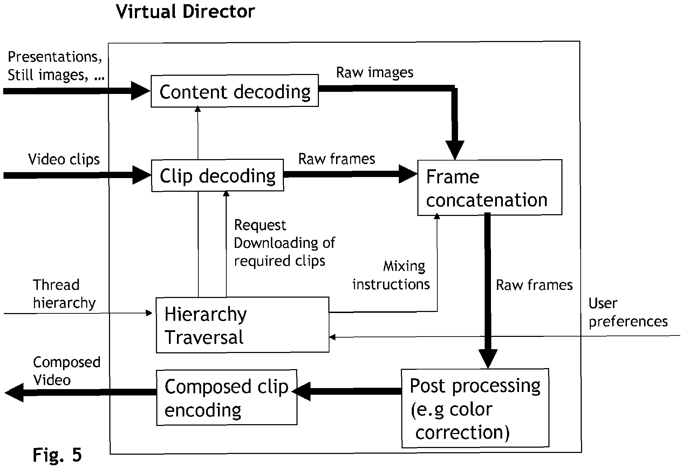

Fig5. shows a more detailed implementation of the virtual director. In this embodiment the virtual director comprises different functional blocks, but, as mentioned before, these can all be realized by means of one single processor. The virtual director is triggered by receiving a new or an updated thread hierarchy. The hierarchy is analyzed in the Hierarchy Traversal module and it triggers in the correct order a decoder for video clips and another decoder for decoding other visual information such as presentations, still images etc.. The URL indicating where to find the video clips may be part of the thread hierarchy metadata and can be forwarded to the decoders. In this way information is provided to the video decoder such that this can retrieve and obtain the proper clips on the video server. For sub clips the thread hierarchy traversal provides the start and end timestamp of the sub clip so that the decoder will only decode the frames belonging to the sub clip. The output of the module "clip decoding" comprise raw frames, which are forwarded to a video editing module denoted "frame concatenation" . In case presentation data, or still images are also to be used within the composed video conversation, this data is fetched as well from the storage server, after which it is decoded to also obtain raw images with pixel data.

In the Frame Concatenation module the raw video frames comprising pixel data, are concatenated, possibly together with the raw image pixel data, based on some mixing instructions, into an new raw video stream. These mixing instruction can be extracted from the thread hierarchy in the hierarchy Traversal module, or can be generated in this Hierarchy Traversal module based on information extracted from the thread hierarchy by combining them with user preferences, when these are provided. The output of the frame concatenation or video editing module thus comprises a raw output stream of successive frames in the order as instructed by the thread hierarchy, and it may optionally be further processed in a post-processing module, e.g. for color correction purposes. This increases the quality level. This adapted stream is then encoded in the video encoder, the ouput being denoted by "video clips" which are ready to be stored on the video server. These composed encoded video streams can thus be viewed by later users.

While the principles of the invention have been described above in connection with specific apparatus, it is to be clearly understood that this description is made only by way of example and not as a limitation on the scope of the invention, as defined in the appended claims. In the claims hereof any element expressed as a means for performing a specified function is intended to encompass any way of performing that function. This may include, for example, a combination of electrical or mechanical elements which performs that function or software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

## Claims

1. Method for generating a composed threaded video from respective video fragments with associated metadata posted by respective users to a video composing server arrangement, said method comprising the steps of
- generating a new thread or updating an existing thread of an existing composed threaded video based on analysis of said associated metadata,
- creating a new composed threaded video based on said respective video fragments or updating said existing composed threaded video by adding or inserting said respective video fragments from said respective users taking into account said updated existing thread.

2. Method according to claim 1 wherein the updating of said composed threaded video comprises:
- analyzing the updated thread for identifying the location of the indicated respective video fragments posted by the respective users and for deriving mixing instructions
- fetching and decoding said indicated respective video fragments into a set of frames of pixel data
- concatenating respective sets of frames into an updated order for generating an updated composed video stream, based on said mixing instructions,
- encoding said updated composed video stream for provision to a video storage.

3. Method according to claim 2, further comprising a step of post processing the updated composed video stream.

4. Video composing server, comprising
- a video storage (VS) for receiving and storing respective video fragments from respective users,
- a hierarchy server(HD) adapted to receive respective metadata associated to said respective video fragments and to a composed threaded video, said hierarchy server being adapted to update a thread from said at least one composed threaded video based on said respective metadata,
- a virtual director module (VD) adapted to receive the updated thread information from said hierarchy server (HD), and to update said composed threaded video based on said updated thread information by fetching the indicated respective video fragments and inserting or adding them to a previous version of said composed threaded video based on said updated thread information.

5. Video composing server (VD) according to claim 3 , wherein said virtual director module is adapted to
- analyze the updated thread for identifying the location of the indicated respective video fragments posted by the respective users within the video storage (VS) and for deriving mixing instructions
- fetch said indicated respective video fragments from said video storage (VS) and decode said indicated respective video fragments into a set of frames of pixel data
- concatenate respective sets of frames into an updated order for generating an updated composed video stream, based on said mixing instructions,
- encoding said updated composed video stream for provision of said encoded updated composed video stream to said video storage.

6. Video composing server according to claim 5, wherein said virtual director module is further adapted to perform post processing on said updated composed video before encoding.
